(19) **Europäisches Patentamt / European Patent Office / Office européen des brevets**

(11) **EP 2 363 938 B1**

(12) **FASCICULE DE BREVET EUROPEEN**

(45) Date de publication et mention
de la délivrance du brevet:
**03.07.2013 Bulletin 2013/27**

(51) Int Cl.:
*G06F 1/32* (2006.01)     *H01M 10/42* (2006.01)
*G06F 1/26* (2006.01)

(21) Numéro de dépôt: **10305221.3**

(22) Date de dépôt: **04.03.2010**

(54) **Circuit et procédé de détection de retrait de piles**

Schaltkreis und Verfahren zur Erkennung des Leistungsschwunds von Batterien

Circuit and method for detecting the removal of batteries

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**07.09.2011 Bulletin 2011/36**

(73) Titulaire: **HAGER CONTROLS**
**67700 Saverne (FR)**

(72) Inventeurs:
• **Woelffel, Vincent**
**67670 Mommenheim (FR)**

• **Lugbull, Pierre-Alain**
**67700 Saverne (FR)**

(74) Mandataire: **Littolff, Denis**
**Meyer & Partenaires**
**Conseils en Propriété Industrielle**
**4, rue de Dublin**
**67300 Schiltigheim (FR)**

(56) Documents cités:
**EP-A1- 1 391 962      GB-A- 2 395 373**
**US-A1- 2003 085 626**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

La présente invention concerne une solution électronique de détection de retrait de pile(s) à destination de tout dispositif fonctionnant électroniquement au moyen d'un microcontrôleur alimenté par une telle source d'énergie, la détection ayant pour objet de commuter ledit microcontrôleur en mode faible consommation dès lors que l'absence de pile(s), quelle qu'en soit la raison, est détectée.

L'invention concerne également un procédé de détection basé sur ledit circuit.

L'objectif principal est de garantir que le retrait de la ou des piles ne se traduise pas par une perte de paramètres de fonctionnement durant le changement de piles, mais que soit au contraire assurée une transition sans incidence de fonctionnement visible. Le microcontrôleur et la carte électronique qu'il équipe doivent dès lors être alimentés par des moyens temporaires tels qu'une capacité réservoir, afin de conserver des informations systèmes du type heure, date, ou toute autre donnée dont la mémorisation est nécessaire à la continuité « fluide » du fonctionnement, pendant que la source d'énergie principale constituée par la pile fait l'objet d'un changement.

On peut par exemple citer l'exemple d'un thermostat fonctionnant avec une pile, qui doit conserver les paramètres pour lesquels il a été réglé (température, période d'utilisation, ...), pendant une durée suffisamment importante pour permettre le changement de la pile d'une manière confortable pour l'opérateur, faute de quoi il faudrait procéder à une réinitialisation/reprogrammation fastidieuse à chaque remplacement.

Le fonctionnement transitoire doit être adapté aux conditions temporaires, en termes de consommation d'énergie, de sorte que ladite durée puisse être la plus confortable possible.

La détection de l'absence de la source d'énergie principale s'effectue de manière périodique, et cette fonction à la mise en oeuvre répétée doit consommer le moins d'énergie possible, et avoir si possible un impact quasi négligeable sur la durée de vie de la ou des piles.

La fonction de détection est mise en oeuvre entre la sortie de la ou des piles d'alimentation d'une part, et le point d'alimentation de la carte électronique d'autre part, au niveau de la capacité réservoir. Entre ces deux points, la chute de tension doit également de préférence être maintenue la plus faible possible, d'une part pour ne pas dissiper d'énergie parasite qui aurait inévitablement une répercussion sur la durée de vie de la ou des piles, et d'autre part pour assurer un niveau de tension compatible avec la commande des composants électroniques.

Un certain nombre de solutions de détection de présence de pile(s) existent ou ont été explorées, utilisant par exemple des composants à seuils, des diodes ou transistors MOS, ou encore des circuits spécifiques faisant basculer le microcontrôleur en mode basse consommation en cas d'absence de pile(s), solutions qui répondent toutes à la fonction mais dégradent sensiblement la durée de vie des piles, car s'avérant dans la plupart des cas gourmandes en énergie.

Le problème se pose dans de très nombreuses applications, par exemple dans les téléphones portables ou dans les dispositifs de stockage/écoute de musique, mais les solutions proposées consomment en réalité presqu'autant de courant que le reste des circuits électroniques du produit, et/ou nécessitent une alimentation temporaire à capacité réservoir ou équivalent de valeur élevée, coûteuse à l'achat, ce qui a une incidence économiquement défavorable sur le produit complet.

Le document GB 2 395 373 A (NEC Technologies) décrit un dispositif comprenant les caractéristiques du préambule de la revendication 1.

Le circuit de détection de retrait de piles mis en oeuvre dans le cadre de cette invention remédie à ces inconvénients, en proposant une solution qui ne consomme que très peu d'énergie, et n'occasionne qu'une chute de tension négligeable entre la sortie de la pile et le point d'alimentation de la carte électronique.

Pour satisfaire à ces objectifs, le circuit de l'invention se caractérise à titre essentiel en ce qu'il comporte une résistance de shunt $R_s$ connectée entre une capacité réservoir alimentant la carte électronique à la tension $V_{ccc}$ et la sortie, à la tension $V_{ccp}$ de la ou des piles, ladite sortie étant raccordée d'une part à une connexion d'entrée/sortie I/O standard du microcontrôleur via une résistance $R_t$ et d'autre part au convertisseur analogique-numérique dudit microcontrôleur.

Le principe sur lequel est basée l'invention revient à comparer les tensions aux deux bornes de la résistance de shunt, et d'en déduire la présence ou non des piles. La résistance $R_s$ étant de faible valeur, la chute de tension qu'elle génère est très faible, et l'on peut pratiquement considérer que les tensions $V_{ccp}$ et $V_{ccc}$ sont égales en fonctionnement permanent, entre les phases de détection, et que par conséquent la consommation de la fonction est négligeable sur le long terme.

L'entrée/sortie I/O standard du microcontrôleur, ainsi que l'entrée au convertisseur analogique-numérique dudit microcontrôleur sont en haute impédance, et leur influence est dès lors négligeable.

De préférence, la tension $V_{ccc}$ d'alimentation de la carte électronique est reliée à la référence du convertisseur analogique-numérique du microcontrôleur. Cette caractéristique permet de simplifier le procédé de détection et de diminuer encore l'impact énergétique de la fonction, comme on le verra plus en détail dans la suite.

Ledit procédé, permettant le retrait de piles au moyen d'un circuit ayant les caractéristiques décrites auparavant, se caractérise principalement en ce qu'il comprend les étapes suivantes :

- mise à la masse de la connexion d'entrée sortie I/O du microcontrôleur ;
- mesure de la tension de sortie $V_{ccp}$ de la ou des piles par le convertisseur analogique-numérique du microcontrôleur ;

- mesure de la tension de sortie $V_{ccc}$ de la carte électronique par le convertisseur analogique-numérique du microcontrôleur ;
- comparaison de la tension de sortie $V_{ccp}$ et de la tension $V_{ccc}$ mesurées;
- passage du microcontrôleur en mode de fonctionnement faible consommation si $V_{ccp} < V_{ccc}$.

La mesure est faite à fréquence régulière par le convertisseur analogique-numérique du microcontrôleur, et elle implique à chaque fois la mise à la masse de l'entrée I/O du microcontrôleur. Cela permet la circulation d'un courant dans $R_t$ afin de simuler une charge en amont de $R_s$.

Dans cette hypothèse, s'il y a existence d'une ou plusieurs piles, le courant circulant dans $R_t$ ne provoque pas de chute de tension au niveau de la sortie de la ou des piles. Dans ce cas là, $V_{ccp}$ est supérieure à $V_{ccc}$.

Au contraire, en l'absence de piles, le courant circulant dans $R_t$ provoque une chute de tension au point de connexion entre la sortie des piles et les résistances $R_t$ et $R_s$, et $V_{ccp}$ devient inférieure à $V_{ccc}$.

Dans les deux cas, en reliant $V_{ccc}$ à la référence du convertisseur analogique-numérique du microcontrôleur, une seule mesure est nécessaire, car la valeur de la conversion réalisée par le convertisseur est dans ce cas à sa valeur maximale. La mesure de la tension de sortie $V_{ccc}$ de la carte électronique par le convertisseur analogique-numérique du microcontrôleur est dans ce cas supprimée. Cette suppression procure un gain de temps et d'énergie.

L'utilisation d'un circuit de conversion analogique-numérique est également avantageuse dans la mesure où elle permet de régler le seuil de détection à partir duquel le microcontrôleur passe en mode veille.

Il est à noter que, dans l'hypothèse où $V_{ccc}$ n'est pas reliée à la référence du convertisseur analogique-numérique, le procédé de l'invention peut parfaitement être mis en oeuvre, mais il nécessite alors une double mesure : d'une part de $V_{ccc}$, puis de $V_{ccp}$, avant une comparaison des deux valeurs. La double mesure engendre bien entendu une consommation plus importante.

L'invention va à présent être décrite en référence aux figures, pour lesquelles :

- la figure 1 est un schéma du circuit de détection de retrait de piles selon l'invention en fonctionnement permanent ;
- la figure 2 montre le même schéma en phase de mesure en présence de piles ; et
- la figure 3 représente une phase de mesure en l'absence de piles.

En référence aux figures, il apparaît que la sortie d'alimentation de la ou des piles est reliée d'une part à une entrée/sortie standard du microcontrôleur, via la résistance $R_t$, d'autre part à une entrée d'un convertisseur analogique-numérique ADC dudit microcontrôleur, et enfin à la résistance $R_s$ interposée entre ladite sortie et le point d'alimentation de la carte $V_{ccc}$.

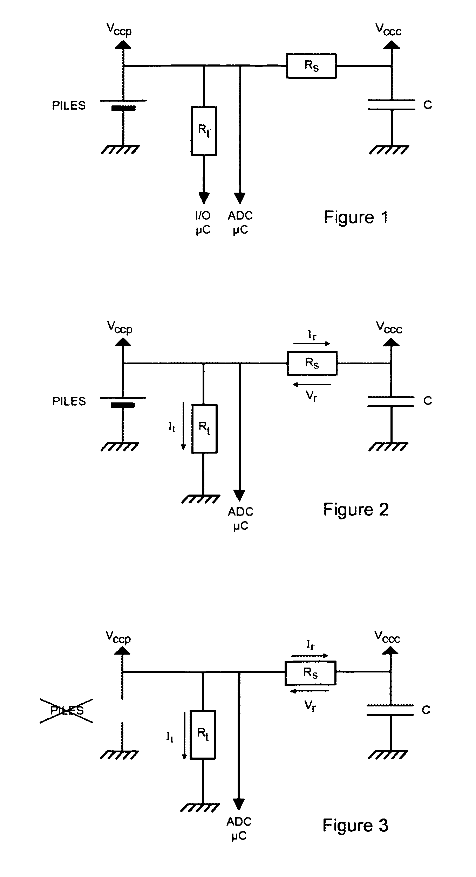

Dans l'hypothèse de la présence d'une ou plusieurs piles, au cours d'une phase de mesure, le fonctionnement se présente sous la forme du schéma de la figure 2 : l'entrée I/O du microcontrôleur est mise à la masse, et un courant $I_t$ parcourt la résistance $R_t$. La comparaison par le convertisseur analogique-numérique de la valeur $V_{ccp}$, qui n'a pas changé avec la valeur $V_{ccc}$, un peu inférieure du fait de la chute de tension $V_r$ produite par le courant $I_r$ dans la résistance $R_s$, montre une tension $V_{ccp}$ supérieure à $V_{ccc}$, indiquant la présence de piles.

A contrario, en l'absence de piles, comme cela apparaît dans le schéma de fonctionnement de la figure 3, le courant $I_t$ circulant dans $R_t$ produit une chute de tension au niveau de $V_{ccp}$, laquelle est mesurée par le convertisseur analogique-numérique comme étant inférieure à la tension $V_{ccc}$. Cette chute de tension est d'ailleurs renforcée, par rapport à $V_{ccc}$, par le changement de sens du courant $I_r$ générant une chute de tension $V_r$ inverse à celle de la figure 2 dans $R_s$.

Dans ce cas, $V_{ccc}$ est clairement supérieure à $V_{ccp}$, ce qui signifie pour le système l'absence de pile(s).

La connexion directe de $V_{ccc}$ à la référence de tension du convertisseur analogique-numérique permet de ne mettre en oeuvre qu'une mesure de la tension $V_{ccp}$ pour procéder à la comparaison, ce qui diminue d'autant la consommation d'énergie.

La consommation, comme on l'a souligné auparavant, est beaucoup plus importante pendant la phase de mesure. Le rapport de durée :

$$\frac{phase\ de\ mesure}{fonctionnement\ permanent}$$

est cependant faible, n'occasionnant qu'une consommation moyenne de la fonction très inférieure à la consommation globale du produit.

**Revendications**

1. Circuit de détection de retrait d'au moins une pile pour dispositif comportant une carte électronique dotée d'un microcontrôleur alimenté par ladite ou lesdites piles, en vue de commuter ledit microcontrôleur en mode faible consommation, ladite carte et le microcontrôleur étant alors temporairement alimentés par une capacité réservoir, **caractérisé en ce qu'**il comporte une résistance de shunt $R_s$ connectée entre la capacité réservoir alimentant la carte électronique à la tension $V_{ccc}$ et la sortie, à la tension $V_{ccp}$, de la ou des piles, laquelle est raccordée d'une part à une connexion d'entrée sortie I/O standard du mi-

crocontrôleur via une résistance $R_t$ et d'autre part au convertisseur analogique-numérique dudit microcontrôleur.

2. Circuit de détection de retrait d'au moins une pile pour dispositif comportant une carte électronique dotée d'un microcontrôleur alimentés par ladite pile selon la revendication précédente, **caractérisé en ce que** la tension $V_{ccc}$ est reliée à la référence du convertisseur analogique-numérique du microcontrôleur.

3. Procédé de détection de retrait d'au moins une pile pour dispositif comportant une carte électronique dotée d'un microcontrôleur alimenté par ladite ou lesdites piles, au moyen d'un circuit selon les revendications précédentes, **caractérisé en ce qu'**il comporte les étapes suivantes répétées à intervalles réguliers :

   - mise à la masse de la connexion d'entrée sortie I/O du microcontrôleur ;
   - mesure de la tension de sortie $V_{ccp}$ de la ou des piles par le convertisseur analogique-numérique du microcontrôleur ;
   - mesure de la tension de sortie $V_{ccc}$ de la carte électronique par le convertisseur analogique-numérique du microcontrôleur ;
   - comparaison de la tension de sortie $V_{ccp}$ mesurée et de la tension $V_{ccc}$ mesurées ;
   - passage du microcontrôleur en mode de fonctionnement faible consommation si $V_{ccp} < V_{ccc}$.

4. Procédé de détection de retrait d'au moins une pile pour dispositif comportant une carte électronique dotée d'un microcontrôleur selon la revendication précédente, **caractérisé en ce que**, la tension $V_{ccc}$ étant reliée à la référence convertisseur analogique-numérique du microcontrôleur, la mesure de la tension de sortie $V_{ccc}$ de la carte électronique par le convertisseur analogique-numérique du microcontrôleur est supprimée.

**Patentansprüche**

1. Schaltkreis zur Erkennung des Leistungsschwunds mindestens einer Batterie für eine Vorrichtung, die eine mit einem Microcontroller ausgestattete elektronische Karte aufweist, der von der oder den Batterien versorgt wird, zwecks Umschaltung des Microcontrollers in einen Energiesparmodus, wobei die Karte und der Microcontroller dann zeitweilig von einer Reservoirkapazität versorgt werden, **dadurch gekennzeichnet, dass** er einen Shuntwiderstand $R_s$ aufweist, der zwischen der Reservoirkapazität, die die elektronische Karte mit der Spannung $V_{ccc}$ versorgt, und dem Ausgang mit der Spannung $V_{ccp}$

der Batterie(n), geschaltet ist, der einerseits über einen Widerstand $R_t$ mit einem Standard-Eingangsanschluss/Ausgang I/O des Microcontrollers und andererseits mit dem Analog-Digital-Wandler des Microcontrollers verbunden ist.

2. Schaltkreis zur Erkennung des Leistungsschwunds mindestens einer Batterie für eine Vorrichtung, die eine mit einem Microcontroller ausgestattete elektronische Karte aufweist, die von der Batterie versorgt werden, nach vorangehendem Anspruch, **dadurch gekennzeichnet, dass** die Spannung $V_{ccc}$ mit der Referenz des Analog-Digital-Wandlers des Microcontrollers verbunden ist.

3. Verfahren zur Erkennung des Leistungsschwunds mindestens einer Batterie für eine Vorrichtung, die eine mit einem Microcontroller ausgestattete elektronische Karte aufweist, der mittels eines Schaltkreises nach einem der vorangehenden Ansprüche von der oder den Batterien versorgt wird, **dadurch gekennzeichnet, dass** es die folgenden, in regelmäßigen Intervallen wiederholten Schritte aufweist:

   - Verbinden des Eingangsanschlusses/Ausgangs I/O des Microcontrollers mit der Masse,
   - Messen der Ausgangsspannung $V_{ccp}$ der Batterie oder Batterien durch den Analog-Digital-Wandler des Microcontrollers,
   - Messen der Ausgangsspannung $V_{ccc}$ der elektronischen Karte durch den Analog-Digital-Wandler des Microcontrollers,
   - Vergleichen der gemessenen Ausgangsspannung $V_{ccp}$ und der gemessenen Spannung $V_{ccc}$,
   - Übergang des Microcontrollers in den Energiesparmodus, wenn $V_{ccp} < V_{ccc}$.

4. Verfahren zur Erkennung des Leistungsschwunds mindestens einer Batterie für eine Vorrichtung, die eine mit einem Microcontroller ausgestattete elektronische Karte aufweist, nach vorangehendem Anspruch, **dadurch gekennzeichnet, dass**, wenn die Spannung $V_{ccc}$ mit der Referenz Analog-Digital-Wandler des Microcontrollers verbunden ist, das Messen der Ausgangsspannung $V_{ccc}$ der elektronischen Karte durch den Analog-Digital-Wandler des Microcontrollers unterdrückt wird.

**Claims**

1. A circuit for detecting the removal of at least one battery for a device including an electronic board equipped with a microcontroller powered by said battery or batteries, in order to switch said microcontroller into a low-power mode, said board and the microcontroller then being temporarily powered by a reservoir capacitor, **characterized in that** it includes

a shunt resistance ($R_s$) connected between the reservoir capacitor powering the electronic board at voltage $V_{ccc}$ and the output, at voltage $V_{ccp}$, of the battery or batteries, which is connected on the one hand to a standard input/output connection, or I/O connection, of the microcontroller using the resistance $R_t$ and on the other hand to the analog-digital converter of said microcontroller.

2. The circuit for detecting the removal of at least one battery for a device including an electronic board equipped with a microcontroller powered by said battery according to the preceding claim, **characterized in that** the voltage $V_{ccc}$ is connected to the reference of the analog digital converter of the microcontroller.

3. A method for detecting the removal of at least one battery for a device including an electronic board equipped with a microcontroller powered by said battery or batteries, using a circuit according to the preceding claims, **characterized in that** it includes the following steps repeated at regular intervals:

   - grounding the input/output (I/O) connection of the microcontroller;
   - measuring the output voltage $V_{ccp}$ of the battery or batteries using the analog-digital converter of the microcontroller;
   - measuring the output voltage $V_{ccc}$ of the electronic board using the analog-digital converter of the microcontroller;
   - comparing the measured output voltage $V_{ccp}$ and the measured voltage $V_{ccc}$;
   - switching the microcontroller to low-power operating mode if $V_{ccp} < V_{ccc}$.

4. The method for detecting the removal of a least one battery for a device including an electronic board equipped with a microcontroller according to the preceding claim, **characterized in that**, the voltage $V_{ccc}$ being connected to the analog-digital converter reference of the microcontroller, the measurement of the output voltage $V_{ccc}$ of the electronic board by the analog-digital converter of the microcontroller is eliminated.

Figure 1

Figure 2

Figure 3

**EP 2 363 938 B1**

## RÉFÉRENCES CITÉES DANS LA DESCRIPTION

### Documents brevets cités dans la description

- GB 2395373 A